# EUROPEAN PATENT APPLICATION

(11) **EP 2 535 110 A1**
(43) Date of publication of application: **19.12.2012**
(21) Application number: 11170320.3
(22) Date of filing: 17.06.2011
(51) Int. Cl.: B02C 2/00

(54) **Crusher, crushing shell, and method of attaching crushing shell**

(71) Applicant: Sandvik Intellectual Property AB, 811 81 Sandviken (SE)
(72) Inventor: Belotserkovskiy, Konstantin, 211 17 Malmö (SE); Gunnarsson, Johan, 275 96 Sövde (SE)

(57) **Abstract**

A cone crusher comprises an inner crushing shell (12) supported on a crushing head (14) and clamped thereonto by a retaining arrangement (10), the crushing head (14) being arranged for rotating about a crushing head axis (A). The retaining arrangement (10) comprises
a first portion (24) of a threaded joint for self-tightening the retaining arrangement (10), said first portion (24) being concentric with said crushing head axis (A) and rigidly joined with the crushing head (14);
a first portion (30) of a form-fitting engagement arrangement, said first portion (30) being rigidly joined with the inner crushing shell (12); and
a crushing shell tightener (20) provided with a second portion (22) of said threaded joint and a second portion (26) of said form-fitting engagement arrangement, said form-fitting engagement arrangement rotationally locking the crushing shell tightener (20) to the inner crushing shell (12).

## Description

### Field of the invention

The present invention relates to a cone crusher comprising an outer crushing shell and an inner crushing shell forming between them a crushing chamber, the inner crushing shell being supported on a crushing head and clamped thereonto by a retaining arrangement comprising a threaded joint for self-tightening the retaining arrangement. The invention also relates to an inner crushing shell adapted for being held by such a retaining arrangement, a crushing shell tightener, and a method of mounting a crushing shell onto a crushing head.

### Background of the invention

A cone crusher may be utilized for efficient crushing of material, such as stone, ore etc., into smaller sizes. WO 2005/092507 describes an exemplary cone crusher. In such a cone crusher, material is crushed between an outer crushing shell, which is mounted in a frame, and an inner crushing shell, which is mounted on a crushing head, by gyrating the inner crushing head such that it rolls on the outer crushing shell via the material to be crushed.

In the course of the crushing operation, the crushing shells are worn down, which means that they need to be replaced at regular intervals. Furthermore, the inner crushing shell is deformed by the material to be crushed, such that its attachment to the crushing head needs to be retightened on at least a regular basis in order to warrant a proper contact between the inner crushing shell and the crushing head. To this end, the inner crushing shell is often mounted by welding it to a head nut, which is connected to the crushing head via a thread having a threading direction selected so as to self-tighten when the crusher is operated. Thereby, the head nut is tightened by the high torques to which the inner crushing shell is exposed when crushing.

Replacing the inner crushing shell usually involves the use of a cutting blowpipe and a sledgehammer. In view thereof, US 7,216,823 suggests an alternative retaining arrangement aiming at facilitating disassembly. The inner crushing shell retaining arrangement of US 7,216,823 comprises a blocking plate, which is arranged to press the inner crushing shell towards the crushing head. The blocking plate is secured by means of bolts to a threaded stud, which is in threaded engagement with the crusher shaft in a self-tightening manner. The inner crushing shell is prevented from slipping relative to the blocking plate by means of lugs.

A drawback of the retaining arrangement suggested in US 7,216,823 is that it is not well suited to handle the high torques involved when operating the crusher.

### Summary of the invention

It is an object of the present invention to solve, or at least mitigate, parts or all of the above mentioned problems. To this end, there is provided a cone crusher comprising an outer crushing shell and an inner crushing shell forming between them a crushing chamber, the inner crushing shell being supported on a crushing head and clamped thereonto by a retaining arrangement, the crushing head being arranged for rotating about a crushing head axis, the retaining arrangement comprising a first portion of a threaded joint for self-tightening the retaining arrangement, said first portion being concentric with said crushing head axis and rigidly joined with the crushing head; a first portion of a form-fitting engagement arrangement, said first portion being rigidly joined with the inner crushing shell; and a crushing shell tightener provided with a second portion of said threaded joint and a second portion of said form-fitting engagement arrangement, said form-fitting engagement arrangement rotationally locking the crushing shell tightener to the inner crushing shell, thereby forming a direct form-fitting engagement between said inner crushing shell and said second portion of said threaded joint, for direct transfer of a self-tightening torque from said inner crushing shell to said second portion of said threaded joint via said direct form-fitting engagement, the threaded joint having a threading direction to, when the crusher is operated, press the crushing shell tightener downwards, for applying a clamping pressure of the retaining arrangement upon the inner crushing shell. The direct form-fitting engagement provides a highly wear and torsion resistant engagement between the inner crushing shell and the self-tightening threaded joint, so as to obtain a reliable and efficient self-tightening of the clamping of the inner crushing shell. Furthermore, disassembly of the retaining arrangement may be simplified, since the high wear and torsion resistance results in the retaining arrangement becoming less deformed by wear from torsional loads.

According to an embodiment, the retaining arrangement further comprises a clamp, connected in a vertically adjustable manner to the crushing shell tightener, for clamping the inner crushing shell onto the crushing head. Such a clamp can be vertically adjusted into clamping engagement with the inner crushing shell during assembly, and thanks to the direct form-fitting engagement between the inner crushing shell and the crushing shell tightener, the clamp does not need to take up the entire, heavy rotary load transmitted for self-tightening the clamp. Thereby, an even more durable retaining arrangement is obtained. Furthermore, disassembly of the inner crushing shell may become even more facilitated; partly because the clamp need only be designed to take up axial loads, and hence may easier be released, and partly because when disassembling, the high axial load on said threaded joint, caused by self-tightening, may be relieved by releasing the clamp, without having to turn the crushing head tightener relative to the crushing head.

According to an embodiment, said crushing shell tightener is formed by a single, integral part provided with said second portion of said threaded joint and said second portion of said form-fitting engagement arrangement. According to such an embodiment, a high torsion resistance between said second portion of said threaded joint and said second portion of said form-fitting engagement arrangement may be obtained. Furthermore, relatively few parts are needed, enabling a relatively simple inventory management.

According to an embodiment, said form-fitting engagement arrangement is adapted for enabling a sliding engagement between said crushing shell tightener and said inner crushing shell in the axial direction. Such sliding engagement completely disconnects the clamping forces from the rotary forces transmitted by the inner crushing shell for self-tightening, thereby concentrating more torsional load to the torsion-resistant form-fitting engagement.

According to an embodiment, said crushing shell tightener is a crushing shell tightening nut, said second portion of said threaded joint being formed by an inner thread of said nut, and said second portion of said form-fitting engagement arrangement being formed by a radially, with respect to said crushing head axis, outer surface of said nut. In such a configuration, the torsional load for self-tightening the clamping of the inner crushing shell will be transferred the shortest possible distance from the inner crushing shell to the threaded engagement, thereby minimizing any torsional yielding or flexing of the engagement between the inner crushing shell and the threaded engagement.

According to an embodiment, the form-fitting engagement arrangement further comprises a locking element between said first and second portions of said form-fitting engagement arrangement, said locking element being shaped in such a manner that, when the locking element is removed from its position between said first and second portions of said form-fitting engagement arrangement, the crushing shell tightener is free to be rotated about the threaded joint without engaging with the inner crushing shell.

According to an embodiment, said vertical adjustability of the clamp is arranged by means of a plurality of bolts engaging with respective threaded holes of said crushing shell tightener. Bolts are well suited for taking up tensile loads along the axial direction of the bolt body.

According to another aspect of the invention, parts or all of the above mentioned problems are solved, or at least mitigated, by a crushing shell for use as an inner crushing shell in a cone crusher, said crushing shell being provided with a first portion of a form-fitting engagement arrangement adapted for rotationally locking the crushing shell to a crushing shell tightener in a direct form-fitting manner. Again, direct form-fitting engagement provides a highly wear and torsion resistant engagement between the inner crushing shell and the self-tightening threaded joint, so as to obtain a reliable and efficient self-tightening of the clamping of the inner crushing shell.

According to an embodiment, the crushing shell comprises a clamping surface for clamping the crushing shell onto the crushing head, the clamping surface being separate from said first portion of said form-fitting engagement arrangement. Thereby, a clamp engaging with the clamping surface does not need to transmit torque for self-tightening the clamp.

According to an embodiment, said clamping surface is configured as an inwardly facing side wall of an upwardly directed ridge extending about a top hole of the crushing shell.

According to an embodiment, said clamping surface is configured as an inwardly extending flange countersunk in a top hole of the crushing shell.

According to an embodiment, said first portion of said form-fitting engagement arrangement comprises a circular top hole, said circular top hole being eccentric with respect to an axis of symmetry of an outer surface of said crushing shell. The circular geometry provides for simple fabrication with high precision, since the form-fitting engagement arrangement may be fabricated or finished by means of drilling or machining in a lathe.

According to an embodiment, said first portion of said form-fitting engagement arrangement comprises a circular top hole provided with a plurality of recesses. As the malleability of the material of inner crushing shell typically needs to be relatively high in order for the inner crushing shell to withstand the engagement with material to be crushed, recesses for engaging with protrusions of a mating surface provide for a durable and wear-resistant engagement compared to e.g. protrusions of the top hole for engaging with recesses of a mating surface.

According to an embodiment, said recesses are shaped as circle segments, as seen from above, for engaging with the crushing shell tightener via cylindrical locking pins. The circular geometry provides for simple fabrication with high precision, since the recesses may be fabricated or finished by means of drilling or machining in a lathe.

According to another aspect of the invention, parts or all of the above mentioned problems are solved, or at least mitigated, by a crushing shell tightener for use in a crusher according to what has been described hereinbefore, said crushing shell tightener comprising a portion of a form-fitting engagement arrangement for engaging with a complementary portion of said form-fitting engagement arrangement provided on a crushing shell so as to form a direct form-fitting engagement rotationally locking the crushing shell to the crushing shell tightener. Said crushing shell tightener may be e.g. a head bolt or a head nut. The crushing shell tightener may be provided with a plurality of threaded holes for engaging with a clamp.

According to another aspect of the invention, parts or all of the above mentioned problems are solved, or at least mitigated, by a method of attaching a crushing shell to the crushing head of a cone crusher, the method comprising mounting the crushing shell in form-fitting engagement with a crushing shell tightener so as to rotationally lock said crushing shell to said crushing shell tightener; and vertically adjusting a clamp such that said crushing shell is clamped onto the crushing head by said clamp. Such a method provides for fast and simple attachment, while allowing a high torsion resistance of the resulting engagement between the inner crushing shell and the crushing shell tightener. According to an embodiment, said clamp is vertically adjusted relative to said crushing shell tightener.

According to an embodiment, said crushing shell is slid onto said crushing shell tightener so as to form said form-fitting engagement. Thereby, the crushing shell tightener does not need to be removed and re-installed when replacing an inner crushing shell.

According to an embodiment, said crushing shell is brought into form-fitting engagement with said crushing shell tightener by inserting a locking element in a gap between the crushing shell and the crushing shell tightener.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 a is a diagrammatic exploded perspective view in section of a first embodiment of a retaining arrangement for retaining an inner crushing shell onto a crushing head;
Fig. 1b is a diagrammatic perspective view in section of the retaining arrangement of Fig. 1 a when assembled;
Fig. 2 is a diagrammatic exploded perspective view in section of a second embodiment of a retaining arrangement for retaining an inner crushing shell onto a crushing head;
Fig. 3a is a diagrammatic exploded perspective view in section of a third embodiment of a retaining arrangement for retaining an inner crushing shell onto a crushing head;
Fig. 3b is a diagrammatic perspective view in section of the retaining arrangement of Fig. 3a when assembled;
Fig. 4a is a diagrammatic perspective view in section of a fourth embodiment of a retaining arrangement for retaining an inner crushing shell onto a crushing head; and
Fig. 4b is a view of the section B-B of Fig. 4a.

### Detailed description of the exemplary embodiments

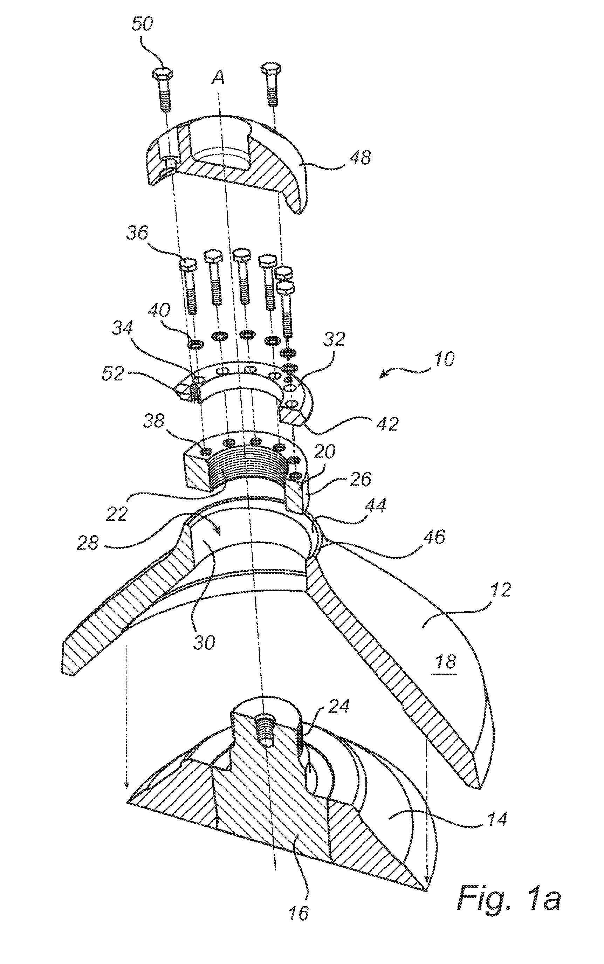

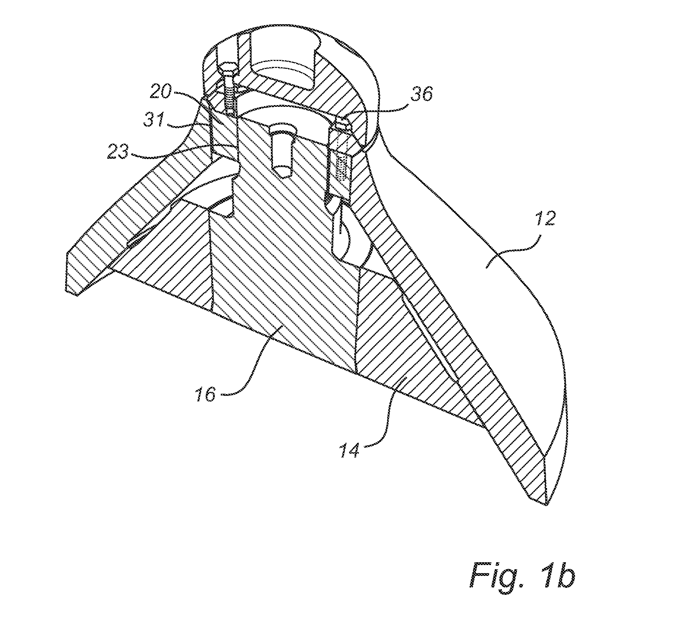

Fig. 1 a is an exploded view illustrating a retaining arrangement 10 for retaining an inner crushing shell 12 onto a crushing head 14. The crushing head 14 is rigidly connected to a head shaft 16, which is concentric with the crushing head 14 and an outer crushing surface 18 of the inner crushing shell 12. The head shaft 16 is rotatably mounted so as to be rotatable about an axis A, which is concentric with the head shaft 16. Thereby, also the crushing head 14 and the outer surface 18 of the inner crushing shell 12 are concentric with and rotatable about said axis of rotation A.

The retaining arrangement 10 comprises a head nut 20, which is provided with an inner thread 22 for cooperating with an outer thread 24 of the crushing head shaft 16. The outer thread 24 of the head shaft 16 is concentric with the axis A, as is, evidently, the inner thread 22 of the head nut 20 when engaging with the outer thread 24 of the head shaft 16.

A radially, with respect to the axis A, outer surface 26 of the head nut 20 has the shape of a cylinder with circular cross-section. The cylindrical outer surface 26 extends in the direction of the axis A, and its circular cross-section is eccentric with respect to the axis A, such that the wall thickness of the head nut 20, defined as the distance between the eccentric outer surface 26 and the concentric inner thread 22 of the head nut, is non-uniform.

The inner crushing shell 12 is provided with a top hole 28, which has an inwardly facing inner surface 30 shaped so as to mate with the outer surface 26 of the head nut 20. Hence, the inner surface 30 of the top hole 28 also has a cylindrical shape with circular cross-section, the circular cross-section being eccentric with respect to the axis A and the outer surface 18 of the inner crushing shell 12. The mating inner surface 30 of the inner crushing shell 12 and outer surface 26 of the head nut 20 thereby form first and second portions, respectively, of a form-fitting engagement arrangement 31 (Fig. 1 b) for rotationally locking the inner crushing shell 12 and the head nut 20 to each other when the retaining arrangement 10 is assembled. Thanks to its cylindrical shape extending in the axial direction, the form-fitting engagement arrangement 31 enables sliding of the first and second portions 30, 26 relative to each other along the direction of the axis A.

A clamp, in the form of a clamping ring 32, is provided with a plurality of through holes 34, allowing clamping bolts 36 to penetrate the clamping ring 32 from above and engage with respective threaded holes 38 distributed about the inner thread 22 of the head nut 20. Spherical washers 40 are provided at the upper opening of the through holes 34 so as to assist in directing the strain of the clamping bolts 36, when tightened, along the direction of the axis A. The clamping ring 32 is provided with a lower, circumferential abutment surface 42, for abutting against an inwardly facing side wall 44 of an upwardly directed ridge 46 extending about the top hole 28 of the inner crushing shell 12. When the head nut 20 is in engagement with the outer thread 24 of the head shaft 16, the clamping ring 32 may be adjusted downwards by tightening the clamping bolts 36 in the threaded holes 38 of the head nut 20. Thereby, the abutment surface 42 of the clamping ring 32 may be brought into abutment with the inner side wall 44 of the ridge 46, such that the inner crushing shell 12 is vertically clamped onto the crushing head 14 by the clamping ring 32. The outer thread 24 of the head shaft 16 and the inner thread 22 of the head nut 20 define first and second portions, respectively, of a threaded joint 23 (Fig. 1 b) for self-tightening of the clamping of the inner crushing shell 12 onto the crushing head 14. This is obtained by the thread of the threaded joint 23 being oriented such that, when the crusher is operated, the torque resulting from the engagement between the material to be crushed and the outer surface 18 of the crushing shell 12 will be directed so as to tighten, i.e. screw down, the head nut 20 on the outer thread 24 of the head shaft 16, thereby increasing the clamping pressure of the clamping ring 32 onto the inner crushing shell 12. The head nut 20 thus functions as a crushing shell tightener, i.e. it interacts with the head shaft 16 so as to tighten any slack in the clamping of the inner crushing shell 12 on the crushing head 14 when the crusher is operated.

The crushing shell 12 may be attached to the crushing head 14 using the following method:

The head nut 20 is partly screwed down onto the head shaft 16, such that a portion of the outer thread 24 of the head shaft 16 extends below the engagement with the inner thread 22 of the head nut 20.

The crushing shell 12 is mounted in direct form-fitting engagement with the head nut 20 by vertically sliding down the crushing shell 12 onto the head nut 20, such that the inner surface 30 of the crushing shell 12 mates with the outer surface 26 of the head nut 20. In order for the crushing shell 12 to properly come to rest onto the crushing head 14, it may be required to turn the head nut 24 or the crushing shell 12 somewhat about the axis A. When having come to rest on the crushing head 14, the crushing shell 12 is in direct form-fitting engagement with the head nut 20 due to the eccentricity of the engaging surfaces 26, 30, so as to rotationally lock the crushing shell 12 to the head nut 20.

The clamping ring 32 is placed onto the crushing shell 12 such that the abutment surface 42 rests on the inwardly facing side wall 44 of the ridge 46, and attached to the head nut 20 by means of the clamping bolts 36 and washers 40. By tightening the clamping bolts 36, the clamping ring 32 is vertically adjusted relative to the head nut 20 such that the crushing shell 12 is clamped onto the crushing head 14 by the clamping ring 32.

Finally, the retaining arrangement 10 is protected from exposure to wear by material to be crushed by a protective head cap 48, which is fixed to the clamping ring 32 by means of head cap bolts 50 engaging with respective threaded holes 52 in the clamping ring 32.

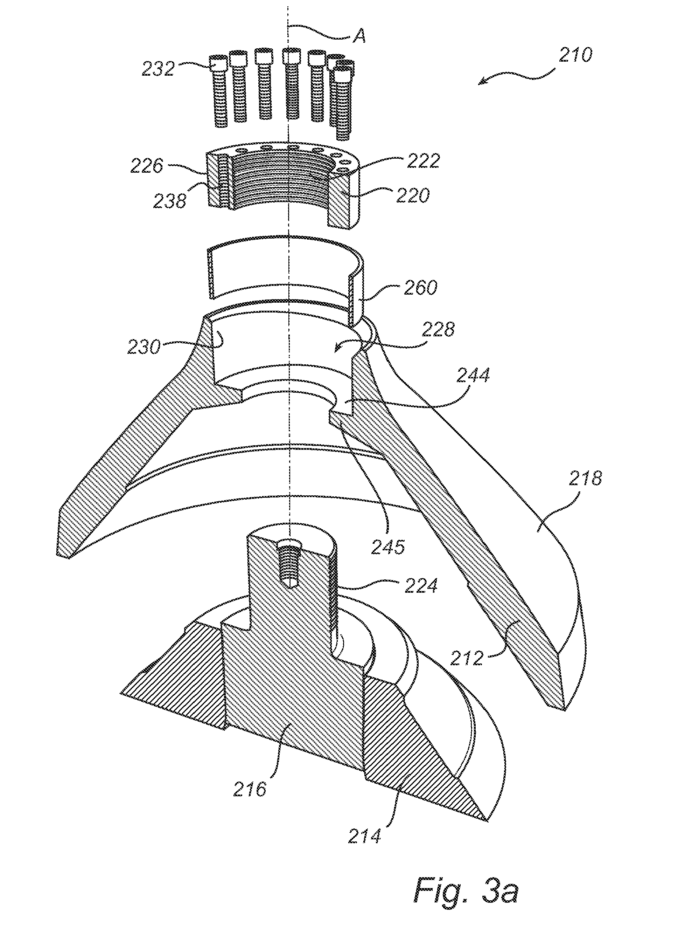

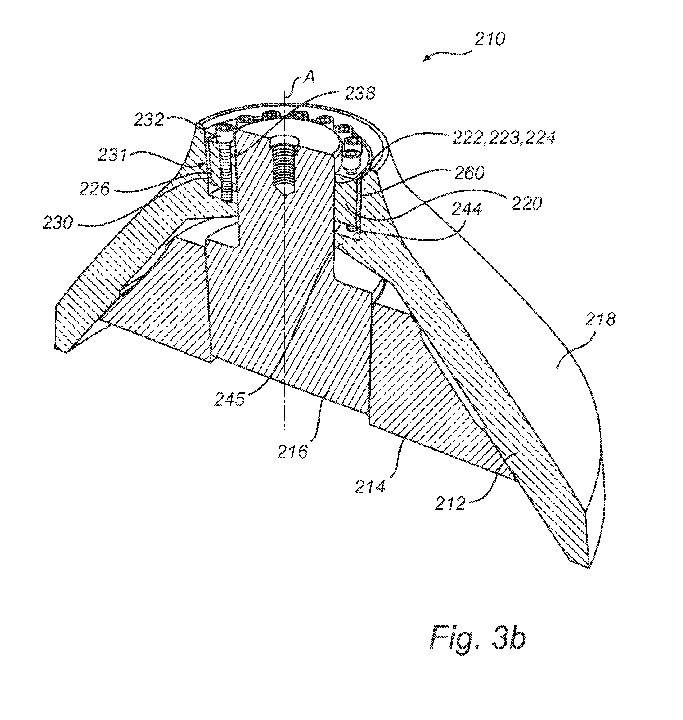

After assembly, the crushing shell 12 will be held onto the crushing head 14 in the manner illustrated in Fig. 1 b. There is a direct form-fitting engagement between the crushing shell 12 and the head nut 20, such that the form-fitting engagement arrangement 31 is configured to transfer the torque required, for self-tightening the head nut 20 on the head shaft 16, directly from the crushing shell 12 to the head nut 20. Thereby, the clamping bolts 36 will not need to transmit the transversal load required to turn the head nut 20, as is needed in retaining arrangements of prior art. A direct form-fitting engagement, which may be implemented either as an arrangement comprising a single form-fitting engagement as in Fig. 1a-b, or as an arrangement of an unbroken chain of a plurality of form-fitting engagements interconnecting several components as will be illustrated further below with reference to Figs 3-4, provides a highly torsion and wear resistant means for transferring torque. Furthermore, the sliding engagement of the form-fitting engagement arrangement 31 allows gradual self-tightening of the clamping over the entire travel range of the sliding engagement.

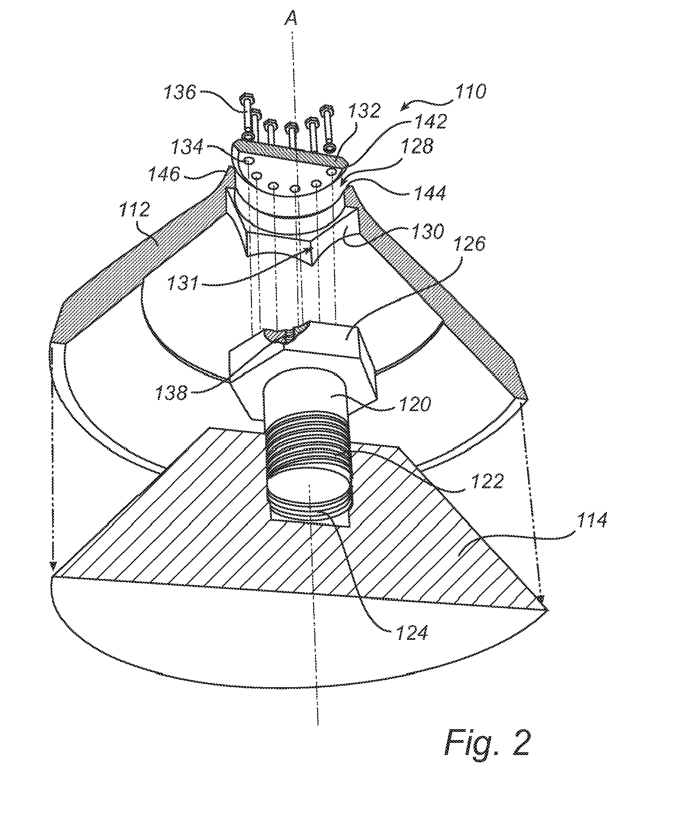

Turning now to Fig. 2, illustrating a second embodiment of a retaining arrangement 110, a crushing head 114 is rotatably mounted in a non-illustrated manner so as to be rotatable about an axis A, which is concentric with the crushing head 114 and an outer surface of an inner crushing shell 112. The crushing head 114 may, by way of example, be arranged in a shaft-less crusher of e.g. the inertia crusher type, having the crushing head journalled in a spherical bearing in a manner known to those skilled in the art.

The retaining arrangement 110 comprises a head bolt 120, which is provided with an outer thread 122 for cooperating with an inner thread 124 of the crushing head 114. The inner thread 124 of the crushing head 114 is concentric with the axis A, as is, evidently, the outer thread 122 of the head bolt 120. A top portion of the head bolt 120 is provided with a radially, with respect to the axis A, outer surface 126 having the shape of a cylinder with hexagonal cross-section. The cylindrical outer surface 126 extends in the direction of the axis A.

The inner crushing shell 112 is provided with a top hole 128, which has an inwardly facing inner surface 130 shaped so as to mate with the outer surface 126 of the top portion of the head bolt 120. Hence, the inner surface 130 of the top hole 128 also has a cylindrical shape with hexagonal cross-section. The mating inner surface 130 of the inner crushing shell 112 and outer surface 126 of the top portion of the head bolt 120 thereby form first and second portions, respectively, of a form-fitting engagement arrangement 131 for rotationally locking the inner crushing shell 112 and the head bolt 120 to each other when the retaining arrangement 110 is assembled. Thanks to its cylindrical shape extending in the axial direction, the form-fitting engagement arrangement 131 enables sliding of the first and second portions 130, 126 relative to each other along the direction of the axis A.

A clamp, in the form of a clamping disc 132, is provided with a plurality of through holes 134, allowing clamping bolts 136 to penetrate the clamping ring 132 from above and engage with respective threaded holes 138 distributed over a top surface of the top portion of the head bolt 120. The clamping disc 132 is provided with a lower, circumferential abutment surface 142, for abutting against an inwardly facing side wall 144 of an upwardly directed ridge 146 extending about the top hole 128 of the inner crushing shell 112. The clamping disc 132 may be adjusted downwards by tightening the clamping bolts 136 in the threaded holes 138 of the head bolt 120, so as to clamp the inner crushing shell 112 onto the crushing head 114 in a manner similar to what has been described hereinbefore with reference to Figs 1a-b.

Similar to the embodiment of Figs 1a-b, the head bolt 120 functions as a crushing shell tightener, i.e. its outer thread 122 interacts with the inner thread 124 of the crushing head 114 so as to tighten any slack in the clamping of the inner crushing shell 112 between the clamping disc 132 and the crushing head 114 when the crusher is operated.

Figs 3a-b illustrate a third embodiment of a retaining arrangement 210 in an exploded view (Fig. 3a), and when assembled (Fig. 3b). Again, as in the embodiment described in detail with reference to Figs 1a-b, a crushing head 214 is rigidly connected to a head shaft 216, which is rotatable about an axis A concentric with the head shaft 216, the crushing head 214, and an outer surface 218 of an inner crushing shell 212. The retaining arrangement 210 comprises a head nut 220, which is provided with an inner thread 222 for cooperating with an outer thread 224 of the crushing head shaft 216. The outer and inner threads 222, 224 form a threaded joint 223 (Fig. 3b) concentric with the axis A.

A radially outer surface 226 of the head nut 220 again has the shape of a cylinder with circular cross-section. The cylindrical outer surface 226 extends in the direction of the axis A, and its circular cross-section is eccentric with respect to the axis A, such that the wall thickness of the head nut 220 is non-uniform. The inner crushing shell 212 is provided with a top hole having an inwardly facing inner surface 230 of a cylindrical shape with circular cross-section, the circular cross-section being eccentric with respect to the axis A and the outer surface 218 of the inner crushing shell 212. Again, the inner surface 230 of the inner crushing shell 212 and outer surface 226 of the head nut 220 form first and second portions, respectively, of a form-fitting engagement arrangement 231 for rotationally locking the inner crushing shell 212 and the head nut 220 to each other when the retaining arrangement 210 is assembled. However, contrary to the embodiment of Figs 1a-b, the inner surface 230 of the inner crushing shell 212 and the outer surface 226 of the head nut 220 do not mate directly, but are separated by a locking element in the form of an intermediate spacer 260 filling up a gap between the inner surface 230 of the crushing shell 212 and the outer surface 226 of the head nut 220. Looking at Fig. 3b, the intermediate spacer 260 has a minimum thickness that is determined by the degree of eccentricity of the head nut 220 so as to allow that, when the spacer 260 is removed, the head nut is free to be turned on the head shaft thread 222 inside the top hole of the crushing shell 212. In the embodiment of Figs 3a-b, the intermediate spacer 260 has the shape of a circular tube extending in the direction of the axis A, and being concentric with the outer surface 226 of the head nut 220. The form-fitting engagement arrangement 231 enables sliding of the first and second portions 230, 226 relative to each other along the direction of the axis A. The sliding may occur along either of the inner and outer surfaces of the intermediate spacer 260.

A plurality of clamps, in the form of clamping screws 232, engages with respective threaded through holes 238 distributed about the inner thread 222 of the head nut 220. The clamping screws 232 protrude downwards from the threaded through holes 238, and abut against an upper surface 244 of an inwardly extending circumferential flange 245 of the crushing shell 212, the flange 245 being countersunk in the top hole 228 of the crushing shell 212 such that it is located below the first portion 230 of the form-fitting engagement arrangement 231.

By tightening the clamping screws 232 in the threaded holes 238 of the head nut 220, a clamping pressure may be applied on the upper surface 244 of the flange 245, such that the inner crushing shell 212 is vertically clamped onto the crushing head 214 by the clamping screws 232. Again, the outer thread 224 of the head shaft 216 and the inner thread 222 of the head nut 220 define first and second portions, respectively, of a threaded joint 223, the thread of the threading joint 223 being oriented for self-tightening of the clamping of the inner crushing shell 212 onto the crushing head 214 in a manner similar to what has been described hereinbefore with reference to Figs 1a-b. Also the head nut 220 thus functions as a crushing shell tightener, i.e. it interacts with the head shaft 216 so as to tighten any slack in the clamping of the inner crushing shell 212 on the crushing head 214 when the crusher is operated.

Referring again to Fig. 3a, the crushing shell 212 may be attached to the crushing head 14 using the following method:

The crushing shell 212 is lowered about the head shaft 216 such that it rests onto the crushing head 214. Then, the head nut 220 is partly screwed down onto the head shaft 216 to a position where the outer surface 226 of the head nut is concentric with the inner surface 230 of the a top hole of the crushing shell 212, and a portion of the outer thread 224 of the head shaft 216 extends below the engagement with the inner thread 222 of the head nut 220. The head nut 220 may be turned on the thread 224 of the head shaft 214 without turning the crushing shell 212 thanks to the gap between the inner surface 230 of the top hole of the crushing shell 212 and the outer surface 226 of the head nut 220.

The crushing shell 212 is put in form-fitting engagement with the head nut 220 by vertically sliding down the intermediate spacer 260 in the gap between the inner surface 230 of the top hole of the crushing shell 12 and the outer surface 226 of the head nut, such that a direct form-fitting engagement is formed between the head nut 220 and the crushing shell 212 via the spacer 260. Similar to the embodiment of Figs 1a-b, the eccentricity of the surfaces 226, 230, will rotationally lock the crushing shell 112 to the head nut 220.

The clamping screws 232 are mounted in the threaded holes 238 of the head nut 220, and vertically adjusted relative to the head nut 220 by tightening them, until they abut against the upper surface 244 of the flange 245, thereby clamping the crushing shell 212 onto the crushing head 214. Fig. 3b illustrates the retaining arrangement 210 after assembly. The retaining arrangement 210 may optionally be protected from exposure to wear by material to be crushed by a protective head cap in a non-illustrated manner.

As is illustrated in Fig. 3b, there is a direct form-fitting engagement between the crushing shell 212 and the head nut 220 via the intermediate spacer 260, which forms part of the form-fitting engagement arrangement 231, such that the form-fitting engagement arrangement 231 is configured to transfer the torque required for self-tightening the head nut 220 on the head shaft 216 directly from the crushing shell 212 to the head nut 220. Thereby, the clamping screws 232 will not need to transmit the transversal load required to turn the head nut 220. The direct form-fitting engagement is formed by an unbroken chain of form-fitting engagements from the inner surface 230 of the top hole 228 of the crushing head 214, via the intermediate spacer 260, to the outer surface 226 of the head nut 220.

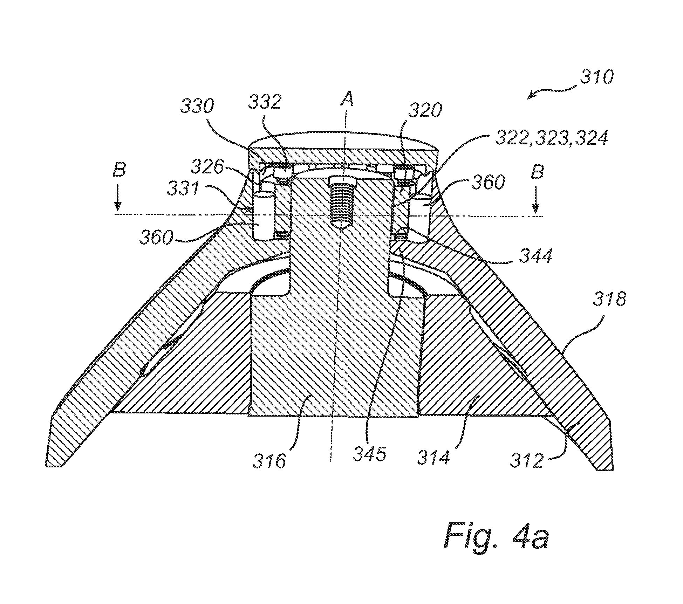

Figs. 4a-b illustrate yet an embodiment of a retaining arrangement, wherein a form-fitting engagement arrangement 331 is formed by an unbroken chain of form-fitting engagements. A crushing head 314 is rigidly connected to a head shaft 316, which is rotatable about an axis A concentric with the head shaft 316, the crushing head 314, and an outer surface of an inner crushing shell 312. The retaining arrangement 310 comprises a head nut 320, which is provided with an inner thread 322 for cooperating with an outer thread 324 of the crushing head shaft 316. Similar to the embodiment of Figs 3a-b, the outer and inner threads 322, 324 form a threaded joint 323, concentric with the axis A, for self-tightening a clamping action of the retaining arrangement 310 upon the outer crushing shell 312. Hence, again, the head nut 320 has the function of a crushing shell tightener.

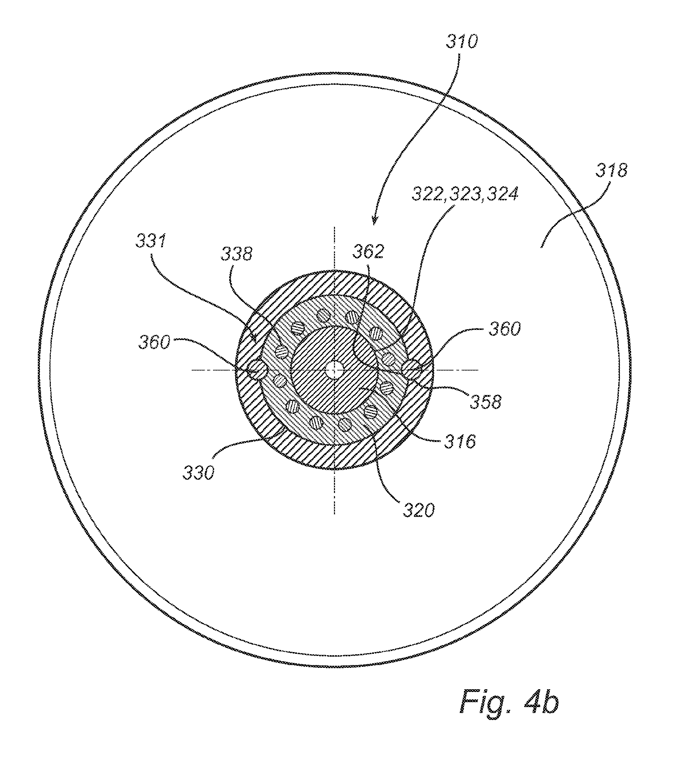

A radially outer surface 326 of the head nut 320 has the shape of a cylinder extending in the direction of the axis A. The inner crushing shell 312 is provided with a top hole having an inwardly facing inner surface 330 of a cylindrical shape. Again, the inner surface 330 of the inner crushing shell 312 and outer surface 326 of the head nut 320 form first and second portions, respectively, of a form-fitting engagement arrangement 331 for rotationally locking the inner crushing shell 312 and the head nut 320 to each other. However, contrary to the embodiments of Figs 1a-b and Fig. 3, each of the inner surface 330 of the inner crushing shell 312 and the outer surface 326 of the head nut 320 has a general circular cylindrical shape that is concentric with the axis A. More specifically, as seen more clearly in Fig. 4b, the cross-section of the inner surface 330 of the top hole of the crushing shell 312 has the shape of a circle provided with a plurality of radially outwardly extending recesses 358 shaped as circle segments. The cross-section of the outer surface 326 of the head nut 320 has the shape of a circle provided with a plurality of radially inwardly extending recesses 362, also shaped as circle segments. The inner and outer surfaces 330, 326 mate along a circular cylindrical periphery, such that the recesses 358, 362 meet in pairs, each pair defining a circular cylindrical space extending parallel to the axis A.

Locking elements in the form of circular cylindrical locking pins 360 fill up the cylindrical spaces formed by the pair of recesses 358, 362 between the inner surface 330 of the crushing shell 312 and the outer surface 326 of the head nut 320. Thanks to the concentricity of the inner surface 330 of the inner crushing shell 312 and outer surface 326 of the head nut 320, when the locking pins 360 are removed, the head nut 320 is free to be turned on the head shaft thread 322 inside the top hole of the crushing shell 312. When the locking pins 360 are installed, there is a direct form-fitting engagement between the crushing shell 312 and the head nut 320. Thereby, the crushing shell 312 may be mounted onto the crushing head 314 following the same method as described hereinbefore with reference to Figs 3a-b, mutatis mutandis. Even though not illustrated so in Figs 4a-b, an upper portion of the locking pins 360 may be shaped so as to protrude out of the cylindrical spaces formed by the pairs of recesses 358, 360, above the upper surface of the head nut 320, such that the locking pins 360 may more easily be pulled out when disassembling the retaining arrangement 310. Said upper portion could also be provided with a gripping member, such as a hook or a head, to even further facilitate removal.

A plurality of clamps, in the form of clamping screws 332, engages with respective threaded through holes 338 distributed about the inner thread 322 of the head nut 320. The clamping screws 332 protrude downwards from the threaded through holes 338, and abut against an upper surface 344 of an inwardly extending circumferential flange 345 of the crushing shell 312, the flange 345 being countersunk in the top hole of the crushing shell such that it is located below the first portion 330 of the form-fitting engagement arrangement 331.

Similarly to the embodiment of Figs 3a-b, by tightening the clamping screws 332 in the threaded holes 338 of the head nut 320, the inner crushing shell 312 may be clamped onto the crushing head 314

Instead of clamping the crushing shell 312 using clamping screws 332, the head nut 320 may be screwed down into abutment onto the upper surface 344 of the flange 345, and then screwed slightly back upwards to the first position where the recesses 358, 362 of the inner and outer surfaces 330, 326 of the crushing shell 312 and the head nut 320 meet. In this position, cylindrical locking pins 360 are inserted, such that the crushing shell 312 is rotationally locked to the crushing shell tightener 320. Then, the crusher is operated, such that the self-tightening engagement of the crushing shell tightener 320 with the crushing head 314 will operate so as to screw down the crushing shell tightener 320 into clamping engagement with the flange 345.

The invention has mainly been described above with reference to a few embodiments. However, as is readily appreciated by a person skilled in the art, other embodiments than the ones disclosed above are equally possible within the scope of the invention, as defined by the appended patent claims.

For example, the invention is not limited to any particular type of cone crusher; on the contrary, it is suited for many different types known to those skilled in the art, such as the type of crusher having the top of a head shaft journalled in a spider assembly, as well as the type of crusher that is described in U. S. Patent No. 1,894, 601, occasionally called Symons type, and the inertia type cone crushers having an unbalance weight for obtaining a gyratory motion of the crushing head.

## Claims

1. A cone crusher comprising an outer crushing shell and an inner crushing shell (12; 112; 212; 312) forming between them a crushing chamber, the inner crushing shell (12; 112; 212; 312) being supported on a crushing head (14; 114; 214; 314) and clamped thereonto by a retaining arrangement (10; 110; 210; 310), the crushing head (14; 114; 214; 314) being arranged for rotating about a crushing head axis (A); the retaining arrangement (10; 110; 210; 310) comprising
a first portion (24; 124; 224; 324) of a threaded joint (23; 123; 223; 323) for self-tightening the retaining arrangement (10; 110; 210; 310), said first portion (24; 124; 224; 324) being concentric with said crushing head axis (A) and rigidly joined with the crushing head (14; 114; 214; 314);
a first portion (30; 130; 230; 330) of a form-fitting engagement arrangement (31; 131; 231; 331), said first portion (30; 130; 230; 330) being rigidly joined with the inner crushing shell (12; 112; 212; 312); and
a crushing shell tightener (20; 120; 220; 320) provided with a second portion (22; 122; 222; 322) of said threaded joint (23; 123; 223; 323) and a second portion (26; 126; 226; 326) of said form-fitting engagement arrangement (31; 131; 231; 331), said form-fitting engagement arrangement (31; 131; 231; 331) rotationally locking the crushing shell tightener (20; 120; 220; 320) to the inner crushing shell (12; 112; 212; 312), thereby forming a direct form-fitting engagement between said inner crushing shell (12; 112; 212; 312) and said second portion (22; 122; 222; 322) of said threaded joint (23; 123; 223; 323), for direct transfer of a self-tightening torque from said inner crushing shell (12; 112; 212; 312) to said second portion (22; 122; 222; 322) of said threaded joint (23; 123; 223; 323) via said direct form-fitting engagement, the threaded joint (23; 123; 223; 323) having a threading direction to, when the crusher is operated, press the crushing shell tightener (20; 120; 220; 320) downwards, for applying a clamping pressure of the retaining arrangement (10; 110; 210; 310) upon the inner crushing shell (12; 112; 212; 312).

2. Cone crusher according to claim 1, the retaining arrangement (10; 110; 210; 310) further comprising a clamp (32; 132; 232; 332), connected in a vertically adjustable manner to the crushing shell tightener (20; 120; 220; 320), for clamping the inner crushing shell (12; 112; 212; 312) onto the crushing head (14; 114; 214; 314).

3. Crusher according to any of the previous claims, said crushing shell tightener (20; 120; 220; 320) being a single, integral part provided with said second portion (22; 122; 222; 322) of said threaded joint (23; 123; 223; 323) and said second portion (26; 126; 226; 326) of said form-fitting engagement arrangement (31; 131; 231; 331).

4. Crusher according to any of the previous claims, said form-fitting engagement arrangement (31; 131; 231; 331) being adapted for enabling a sliding engagement between said crushing shell tightener (20; 120; 220; 320) and said inner crushing shell (12; 112; 212; 312) in the axial direction.

5. Crusher according to any of the previous claims, said crushing shell tightener being a crushing shell tightening nut (20; 220; 320), said second portion of said threaded joint (23; 223; 323) being formed by an inner thread (22; 222; 322) of said nut (20; 220; 320), and said second portion of said form-fitting engagement arrangement (31; 231; 331) being formed by a radially, with respect to said crushing head axis (A), outer surface (26; 226; 326) of said nut (20; 220; 320).

6. Crusher according to any of the previous claims, the form-fitting engagement arrangement (231, 331) further comprising a locking element (260; 360) between said first and second portions (226, 230; 326, 330) of said form-fitting engagement arrangement (231; 331), said locking element (260; 360) being shaped in such a manner that, when the locking element (260; 360) is removed from its position between said first and second portions (226, 230; 326, 360) of said form-fitting engagement arrangement (231; 331), the crushing shell tightener (220; 320) is free to be rotated about the threaded joint (223; 323) without engaging with the inner crushing shell (212; 312).

7. Crusher according to any of the claims 2-6, said vertical adjustability being arranged by means of a plurality of bolts (36; 136; 232; 332) engaging with respective threaded holes (38; 138; 238; 338) of said crushing shell tightener (20; 120; 220; 320).

8. A crushing shell for use as an inner crushing shell in a cone crusher, said crushing shell (12; 112; 212; 312) being provided with a first portion (30; 130; 230; 330) of a form-fitting engagement arrangement (31; 131; 231; 331) adapted for rotationally locking the crushing shell (12; 112; 212; 312) to a crushing shell tightener (20; 120; 220; 320) in a direct form-fitting manner.

9. Crushing shell according to claim 8, further comprising a clamping surface (44; 144; 244; 344) for clamping the crushing shell (12; 112; 212; 312) onto the crushing head (14; 114; 214; 314), the clamping surface (44; 144; 244; 344) being separate from said first portion (30; 130; 230; 330) of said form-fitting engagement arrangement (31; 131; 231; 331).

10. Crushing shell according to claim 9, said clamping surface being configured as an inwardly facing side wall (44; 144) of an upwardly directed ridge (64; 146) extending about a top hole (28; 128) of the crushing shell (12; 112).

11. Crushing shell according to any of the claims 9-10, said clamping surface (244; 344) being configured as an inwardly extending flange (245; 345) countersunk in a top hole of the crushing shell (212; 312).

12. Crushing shell according to any of the claims 8-11, said first portion (30; 230) of said form-fitting engagement arrangement (31; 231) comprising a circular top hole (28; 228), said circular top hole (28; 228) being eccentric with respect to an axis of symmetry (A) of an outer surface (18; 218) of said crushing shell (12; 212).

13. Crushing shell according to any of the claims 8-12, said first portion (330) of said form-fitting engagement arrangement (331) comprising a circular top hole provided with a plurality of recesses (358).

14. Crushing shell according to claim 13, said recesses (358) being shaped as circle segments, as seen from above, for engaging with the crushing shell tightener (320) via cylindrical locking pins (360).

15. A crushing shell tightener (20; 120; 220; 320) for use in a crusher according to any of the claims 1-7, said crushing shell tightener (20; 120; 220; 320) comprising a portion (26; 126; 226; 326) of a form-fitting engagement arrangement (31; 131; 231; 331) for engaging with a complementary portion (30; 130; 230; 330) of said form-fitting engagement arrangement (31; 131; 231; 331) provided on a crushing shell (12; 112; 212; 312) so as to form a direct form-fitting engagement rotationally locking the crushing shell (12; 112; 212; 312) to the crushing shell tightener (20; 120; 220; 320).

16. Method of attaching a crushing shell (12; 112; 212; 312) to a crushing head (14; 114; 214; 314) of a cone crusher, comprising
mounting the crushing shell (12; 112; 212; 312) in direct form-fitting engagement with a crushing shell tightener (20; 120; 220; 320) so as to rotationally lock said crushing shell (12; 112; 212; 312) to said crushing shell tightener (20; 120; 220; 320); and
vertically adjusting a clamp (32; 132;232; 332) such that said crushing shell (12; 112; 212; 312) is clamped onto the crushing head (14; 114; 214; 314) by said clamp (32; 132; 232; 332).

17. The method according to claim 16, wherein said clamp (32; 132; 232; 332) is vertically adjusted relative to said crushing shell tightener (20; 120; 220; 320).

18. The method according to any of the claims 16-17, wherein said crushing shell (12; 112) is slid onto said crushing shell tightener (20; 120) so as to form said direct form-fitting engagement.

19. Method according to any of the claims 16-18, wherein said crushing shell (212; 312) is brought into form-fitting engagement with said crushing shell tightener (220; 320) by inserting a locking element (260; 360) in a gap between the crushing shell (212; 312) and the crushing shell tightener (220; 320).
